# EUROPÄISCHE PATENTSCHRIFT

(11) **EP 1 690 024 B1**
(45) Veröffentlichungstag und Bekanntmachung des Hinweises auf die Patenterteilung: **04.02.2009**
(21) Anmeldenummer: 04803375.7
(22) Anmeldetag: 01.12.2004
(51) Int. Cl.: F16H 55/28

(54) **VORRICHTUNG ZUM ANDRÜCKEN EINER ZAHNSTANGE**
DEVICE FOR PRESSING ON A RACK
DISPOSITIF POUR SERRER UNE CREMAILLERE

(30) Priorität: 05.12.2003 DE 10357013; 12.02.2004 DE 102004006935
(43) Veröffentlichungstag der Anmeldung: 16.08.2006
(73) Patentinhaber: ZF-Lenksysteme GmbH, 73527 Schwäbisch Gmünd (DE)
(72) Erfinder: HAFERMALZ, Jens-Uwe, 73116 Wäschenbeuren (DE)
(86) Internationale Anmeldenummer: PCT/EP2004/013597
(87) Internationale Veröffentlichungsnummer: WO 2005/054715

(56) Entgegenhaltungen:
- EP-A- 0 291 155
- WO-A-20/04078559
- DE-A1- 19 811 917
- DE-A1- 19 937 253
- FR-A- 2 029 199
- GB-A- 2 333 079
- US-A- 4 400 991
- US-A- 4 593 578
- US-A- 4 785 685
- US-A- 4 800 770

## Beschreibung

Die Erfindung betrifft eine Vorrichtung zum Andrücken einer Zahnstange an ein Ritzel mit einem Druckstück und einem Anschlagelement gemäß dem Oberbegriff von Anspruch 1.

Die Erfindung betrifft auch eine Vorrichtung zum Andrücken einer Zahnstange an ein Ritzel gemäß dem Oberbegriff von Anspruch 16.

Eine gattungsgemäße Vorrichtung ist aus der US 4 593 578 bekannt.

Zahnstangenlenkungen für Kraftfahrzeuge weisen üblicherweise ein Lenkgehäuse auf, in dem eine Zahnstange längsverschiebbar gelagert ist. Ein in dem Lenkgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt. Der Eingriff des Ritzels in die Zahnstange wird spielfrei gehalten, in dem ein gegenüber dem Ritzel an der Zahnstange anliegendes Druckstück unter Federvorspannung die Zahnstange gegen das Ritzel drückt. Aus dem allgemeinen Stand der Technik ist es dabei bekannt, dass das Druckstückspiel über eine Stellschraube eingestellt wird, welche dabei auch die Federvorspannung beeinflusst.

Das Druckstück muss dabei derart ausgestaltet sein bzw. derart gegen die Zahnstange drücken, dass eine Kupplung der Zahnstange und des Ritzels ohne Spiel der miteinander in Eingriff stehenden Zähne aufrecht erhalten werden kann. Dabei müssen Fehler hinsichtlich der Exzentrizität des Ritzels, seines axialen Spiels und des Verschleißes der Zähne berücksichtigt werden. Weiterhin muss der Mechanismus in der Lage sein, Stöße, die von den gelenkten Räder stammen, wenn diese beispielsweise auf ein Hindernis stoßen, ohne Beschädigungen zu ertragen.

Aus der Schrift, der DE 198 11 917 A1, ist ein Kupplungsmechanismus für eine Zahnstange gegen ein Ritzel bekannt, der eine Feder zum Andrücken des Ritzels und der Zahnstange gegeneinander aufweist, wobei die Feder dafür eingerichtet ist, ihre Wirkung entsprechend zumindest zwei aufeinanderfolgenden Stufen des Andrucks auszuüben. Die Feder ist dabei als Elastomer ausgebildet, welches wenigstens zwei Anlageflächen zwischen Stellschraube und Druckstück hat. Dadurch, dass der Andruck wenigstens zweistufig erfolgt, wird erreicht, dass Schwingungen und Stöße, die dazu neigen, die Zahnstange vom Ritzel zu entkoppeln und Geräusche zu verursachen, verstärkt gedämpft werden, da die zweite Stufe des Andrucks an die Stelle der ersten Stufe tritt, sobald die Schwingungen oder Stöße die Möglichkeiten der Einwirkung der ersten Stufe überschreiten. Man erhält auf diese Weise eine verstärkte Andruckkraft, wodurch die Zahnstange und das Ritzel in verbesserter Form gekuppelt und die entstehenden Geräusche vermindert werden.

Von Nachteil bei der gattungsgemäßen Schrift ist jedoch die große Toleranz der Federkraft bei kleinem Druckstückspiel. Durch die große Toleranz verändert sich die Reibung im Lenksystem, wodurch das Geradeauslaufverhalten des Kraftfahrzeuges negativ beeinflusst wird. Von Nachteil bei der gattungsgemäßen Schrift ist außerdem, dass die Federkraft relativ anfällig gegenüber Temperaturschwankungen ist. Zusätzlich dazu ändert sich die Federkraft des Elastomer über dessen Lebensdauer.

Einerseits ist es bei der Vorrichtung zum Andrücken einer Zahnstange an ein Ritzel wesentlich, dass die Reibung im Lenksystem bei dem Geradeauslauf gering ist, andererseits soll beim Umlenken mit großen Lenkgeschwindigkeiten ein spielfreier Verzahnungseingriff zuverlässig gewährleistet sein. Darüber hinaus muss die Vorrichtung möglichst unanfällig gegen Temperaturschwankungen und Verschleiß sein.

Der vorliegenden Erfindung liegt daher die Aufgabe zugrunde, eine Vorrichtung zum Andrücken einer Zahnstange an ein Ritzel mit einem Druckstück und einem Anschlagelement zu schaffen, die die Nachteile des Standes der Technik löst, insbesondere sehr gute Dämpfungseigenschaften bei geringer Abnützung aufweist, ein Auftreten von Geräuschen zuverlässig verhindert und preisgünstig herstellbar und montierbar ist.

Diese Aufgabe wird erfindungsgemäß durch die kennzeichnenden Merkmale von Anspruch 1 gelöst.

Diese Aufgabe wird erfindungsgemäß ebenfalls durch die kennzeichnenden Merkmale von Anspruch 16 gelöst.

Dadurch, dass gemäß Anspruch 1 die zweite Stufe des Andrucks durch die Kontaktierung von jeweils aufeinander ausgerichteten Anlageflächen des Druckstücks und des Anschlagelements erfolgt, wird ein vorteilhafter, wenigstens zweistufig wirkender Andruck des Druckstücks auf die Zahnstange erzielt. In einer Grundstellung, d.h. in einer Stellung, bei der keine dynamischen Kräfte bzw. Kräfte durch den Eingriff des Ritzels in die Zahnstange wirken, die geeignet sind, die Zahnstange in Richtung auf das Druckstück zu verschieben, wirkt nur die erste Stufe des Andrucks, d.h. das zwischen dem Druckstück und dem Anschlagelement angeordnete Federelement. In dieser Position befinden sich die Anlageflächen des Druckstücks und des Anschlagelementes auf Abstand zueinander.

Durch die Federvorspannung des Federelements ergibt sich ein Druckstückspiel, bei dem nur das Federelement, d.h. die erste Stufe des Andrucks wirkt. Das Federelement kann in üblicher Weise in engen Toleranzen gefertigt werden und übt damit eine definierte Federkraft auf die Zahnstange aus. Dadurch ist ein gutes Geradeausfahren des Kraftfahrzeuges bei sehr kleinem axialen Druckstückspiel möglich. Sobald beim Lenken große Zahntrennkräfte oder andere Kräfte auftreten, die die Zahnstange in Richtung auf das Druckstück bewegen, wird die Federkraft des Federelements überwunden, wodurch die Anlagefläche des Druckstücks mit der Anlagefläche des Anschlagelements kontaktiert. Dadurch, dass erfindungsgemäß wenigstens eine Anlagefläche federnd ausgebildet ist, setzt die zweite Stufe des Andruck ein sobald die Anlageflächen miteinander kontaktieren. Die zweite Stufe des Andrucks bzw. die federnd ausgebildete Anlagefläche weist vorzugsweise eine große Federkraft auf, wodurch ein spielfreier Verzahnungseingriff beim Umlenken mit großen Lenkgeschwindigkeiten gesichert wird. Dieser spielfreie Verzahnungseingriff reduziert die Geräuschentwicklung beim Umlenken.

Die federnde Ausgestaltung wenigstens einer der Anlageflächen beginnt erst zu wirken, wenn die Anlageflächen miteinander kontaktieren. Vorher kann die federnde Anlagefläche entspannt sein bzw. die federnde Anlagefläche wird erst durch die Kontaktierung gespannt.

Wie sich in Versuchen herausgestellt hat, weist die erfindungsgemäße Vorrichtung eine hohe Lebensdauer bei unveränderter Wirkung auf. Darüber hinaus ist die erfindungsgemäße Vorrichtung, im Unterschied zu der aus der DE 198 11 917 A1 bekannten Vorrichtung, relativ unanfällig gegen Temperaturschwankungen.

Von Vorteil ist es, wenn das Druckstück aus Metall, vorzugsweise Aluminium und das Anschlagelement aus Metall, vorzugsweise Stahl, ausgebildet sind. Von Vorteil ist es außerdem, wenn das Federelement als metallische Spiralfeder ausgebildet ist.

Eine metallische Ausbildung insbesondere des Druckstücks und des Anschlagelementes ermöglicht eine besonders exakte Herstellung mit geringen Toleranzen. Dadurch lässt sich das Druckstückspiel, bei dem nur das zwischen dem Druckstück und dem Anschlagelement angeordnete Federelement wirkt, besonders gering halten, wodurch die auftretenden Geräusche minimiert werden.

Durch die metallische Ausbildung des Druckstücks, des Anschlagelements und des Federelements weist die Vorrichtung zwei metallische Federn, nämlich das eingespannte Federelement sowie die wenigstens eine gefederte Anlagefläche auf, die eine hohe Lebensdauer aufweisen und im wesentlichen unabhängig gegenüber Temperaturschwankungen sind. Dadurch kann die Reibung im Lenksystem exakt eingestellt werden. In Versuchen hat sich herausgestellt, dass sich die erfindungsgemäße Lösung besonders einfach und kostengünstig herstellen sowie montieren lässt.

Die erfindungsgemäße Aufgabe wird in vorteilhafter Weise ebenfalls durch die Merkmale von Anspruch 16 gelöst. Im Unterschied zu der Lösung gemäß Anspruch 1 liegen hierbei die Anlageflächen des Druckstücks und des Anschlagelements aneinander an. Der Vorteil besteht dabei darin, dass keine Geräusche durch eine Kontaktierung der Anlagefläche des Druckstücks mit der Anlagefläche des Anschlagelements entstehen. Von Vorteil ist es dabei, wenn die Anlageflächen gegeneinander vorgespannt sind, um einem auftretenden Verschleiß oder einem Setzprozess über die Lebenszeit der Vorrichtung entgegenzuwirken. Durch die Vorspannung der Anlageflächen kann daher erreicht werden, dass die Anlageflächen auch dann noch aneinander anliegen, wenn beispielsweise das Ritzel aufgrund von Verschleiß abgenutzt ist.

Von Vorteil ist es, wenn das Druckstück eine Mantelfläche und einen in Richtung auf das Anschlagelement überstehenden Zapfen aufweist, dessen freiliegendes Ende als Anlagefläche ausgebildet ist und das Anschlagelement eine ringförmige Mantelfläche und eine als Anlagefläche ausgebildete Stirnwandung aufweist.

Dabei kann die Stirnwandung des Anschlagelements durch die Anlagefläche des Zapfens in der Grundstellung eingefedert sein. Vorgesehen sein kann dabei, dass die Anlagefläche des Anschlagelementes 0,1 bis 0,5 mm eingefedert ist.

Zur Erzeugung einer progressiven Federkennlinie kann vorgesehen sein, dass die Anlagefläche des Zapfens ballig ausgebildet ist.

Vorteilhafte Ausgestaltungen und Weiterbildungen der erfindungsgemäßen Lösung ergeben sich aus den weiteren Unteransprüchen. Nachfolgend sind anhand der Zeichnung zwei Ausführungsbeispiele der Erfindung prinzipmäßig dargestellt.

Es zeigt:
- Fig. 1: einen Schnitt durch die erfindungsgemäße Vorrichtung in einer Grundstellung in einer Ausgestaltung, bei der die Anlageflächen auf Abstand zueinander angeordnet sind;
- Fig. 2: einen Schnitt durch die erfindungsgemäße Vorrichtung in einer Grundstellung in einer Ausgestaltung, bei der die Anlageflächen aneinander anliegen;
- Fig. 3: einen Schnitt durch die nicht beanprüchte Vorrichtung in einer Grundstellung in einer Ausgestaltung, bei der die Anlageflächen aneinander anliegen und ein Zapfen des Druckstückes federnd ausgebildet ist;
- Fig. 4: einen Schnitt durch die erfindungsgemäße Vorrichtung in einer Grundstellung in einer Ausgestaltung, bei der die Anlageflächen aneinander anliegen und sowohl ein Zapfen des Druckstückes als auch eine Stirnwandung des Anschlagelementes federnd ausgebildet sind; und
- Fig. 5: eine Darstellung des Druckstückes mit einem 1/4-Ausschnitt.

Zahnstangenlenkgetriebe, insbesondere für Kraftfahrzeuge, mit Druckstücken zum Kuppeln einer Zahnstange gegen ein Ritzel sind bereits hinlänglich bekannt, wozu nur beispielsweise auf die DE 29 28 732 C2 und die DE 198 11 917 A1 verwiesen wird. Nachfolgend wird deshalb lediglich auf die für die Erfindung relevanten Merkmale näher eingegangen. Aus dem allgemeinen Stand der Technik und aus den vorgenannten Patentpublikationen ist auch das Grundprinzip eines derartigen Kupplungsmechanismus für eine Zahnstange und deren Antriebsritzel hinlänglich bekannt.

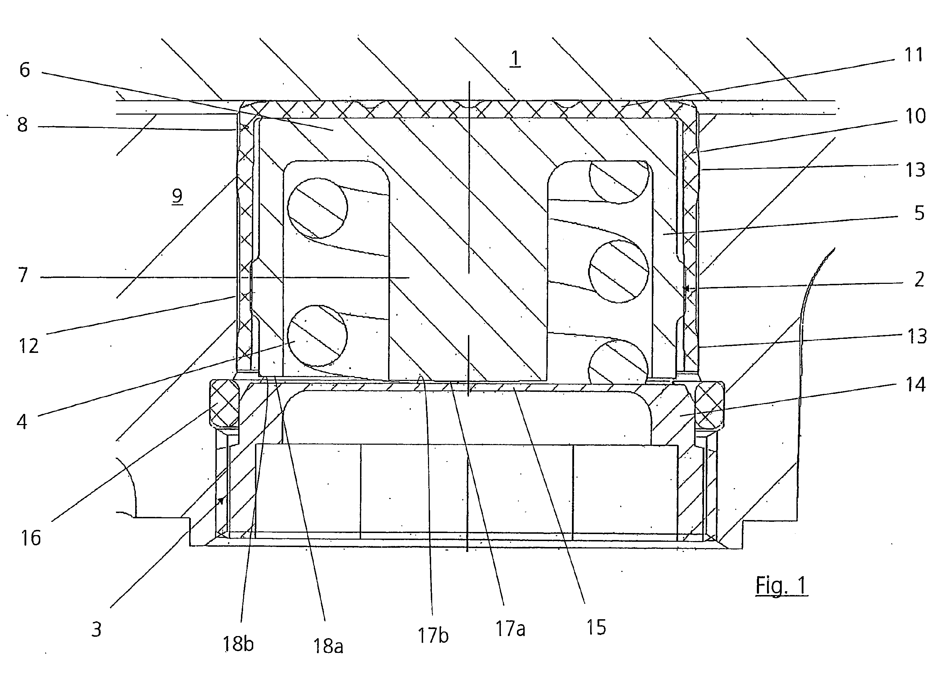

Wie aus Fig. 1 ersichtlich ist, weist die erfindungsgemäße Vorrichtung zum Andrücken einer Zahnstange 1 an ein Ritzel (nicht dargestellt) ein Druckstück 2 und ein Anschlagelement 3 auf. Zwischen dem Druckstück 2 und dem Anschlagelement 3 ist ein als Druckfeder ausgebildetes Federelement 4 angeordnet. Das Federelement 4 übt dabei die erste von wenigstens zwei aufeinanderfolgenden Stufen des Andrucks aus, welche das Druckstück 2 gegen die Zahnstange 1 drücken.

Das Druckstück 2 weist im wesentlichen eine ringförmige Mantelfläche 5, ein der Zahnstange 1 zugewandtes Bodenteil 6 sowie einen über die Mantelfläche 5 in Richtung auf das Anschlagelement 3 überstehenden Zapfen 7 auf.

Das Druckstück 2 wird bevorzugt aus Aluminium gebildet und durch Druckgießen hergestellt.

Wie aus Fig. 1 ersichtlich, wird das Druckstück 2 in einem Aufnahmeraum 8 eines Lenkungsgehäuses 9 angeordnet. Das Bodenteil 6 des Druckstückes 2 ist dabei in Richtung auf die Zahnstange 1 ausgerichtet. Das Bodenteil 6 weist dabei eine an den angrenzenden Umfang der Zahnstange 1 angepassten Verlauf auf. Der Aufnahmeraum 8 in dem Lenkungsgehäuse 9 ist üblicherweise als zylindrische Bohrung ausgebildet, wobei die Mantelfläche 5 des Druckstückes 2 im wesentlichen an den Innendurchmesser der Aufnahmebohrung 8 angepasst ist.

Das der Zahnstange 1 zugewandte Bodenteil 6 kann in einer Ausführungsform mit einer Kunststoffeinlage versehen sein, die als Anlagefläche für die Zahnstange 1 dient. Alternativ dazu kann das Bodenteil 6 bzw. das gesamte Druckstück 2 auch aus Kunststoff ausgebildet sein.

Im Ausführungsbeispiel ist vorgesehen, dass das Druckstück 2 aus Metall, vorzugsweise aus Aluminium, ausgebildet ist, wobei zwischen der Innenwandung des Aufnahmeraums 8 und der Mantelfläche 5 des Druckstücks 2 eine Gleitfolie 10 angeordnet ist. Die Gleitfolie 10 weist dabei einen Gleitboden 11 als Lagerstelle für die Zahnstange 1 auf. Eine Kunststoffeinlage im Bodenteil 6 oder eine ähnliche reibungsreduzierende Einlage ist somit nicht notwendig. Vorzugsweise kann die Gleitfolie 10 mittels Presspassung in dem Aufnahmeraum 8 angeordnet sein. Die Gleitfolie 10 bzw. der Gleitboden 11 ermöglicht es einerseits, dass das Druckstück 2 die erforderliche Anpresskraft übertragen kann, andererseits wird durch den Gleitboden 11 eine Lagerfläche ausgebildet, die bei Verschiebung der Zahnstange 2 keine nennenswerten Reibkräfte und keinen Verschleiß hervorruft. Hinsichtlich einer besonders bevorzugten Ausgestaltung der Gleitfolie 10 bzw. der Mantelfläche 5 des Druckstücks 2 wird auf die DE 103 09 303.6 verwiesen.

Im Ausführungsbeispiel ist vorgesehen, dass das Druckstück 2 mittels Presspassung in der Gleitfolie 10 angeordnet bzw. mit dieser verbunden ist. In einfacher Weise kann dies durch einen Außendurchmesser der Mantelfläche 5 des Druckstücks 2 realisiert werden, der größer ist als der Innendurchmesser der Gleitfolie 10. Im vorliegenden Ausführungsbeispiel weist die Mantelfläche 5 jedoch einen Ring 12 auf. Die Presspassung besteht dabei zwischen dem Außendurchmesser des Ringes 12 der Mantelfläche 5 und dem Innendurchmesser der Gleitfolie 10.

Die Presspassung zwischen der Gleitfolie 10 und der Innenwandung des Aufnahmeraums 8 erfolgt analog zu der Presspassung zwischen dem Druckstück 2 und der Gleitfolie 10. Die Gleitfolie 10 weist hierfür umlaufende Gleitfolienringe 13 auf, die einen Außendurchmesser aufweisen, der größer ist als der Durchmesser des Aufnahmeraumes 8. Die Gleitfolie 10 kann beispielsweise eine Wandstärke von vorzugsweise 1 mm aufweisen, wobei die Gleitfolie 10 im Bereich der Gleitfolienringe 13 dicker ausgebildet ist, so dass die Wandstärke beispielsweise 1,1 bis 1,5 mm, vorzugsweise 1,2 mm, aufweist.

Wie aus Fig. 1 des weiteren ersichtlich ist, wird die Aufnahmebohrung 8 an ihrer von der Zahnstange 1 abgewandten Öffnung durch das Anschlagelement 3 verschlossen. Im dargestellten Ausführungsbeispiel ist das Anschlagelement dabei als Stellschraube 3 ausgebildet, die definiert in die Aufnahmebohrung 8 eingeschraubt wird. Die Stellschraube 3 weist dabei eine ringförmige Mantelfläche 14 und eine Stirnwandung 15 auf. Die Stellschraube 3 wird bevorzugt aus Stahl gebildet und tiefgezogen hergestellt.

Zur Abdichtung zwischen der Innenwandung des Aufnahmeraums 8 und der Stellschraube 3 kann ein Dichtring 16 vorgesehen sein.

Wie sich aus Fig. 1 ergibt, ist das Federelement 4 als Spiralfeder ausgebildet, die im wesentlichen innerhalb eines durch die Mantelfläche 5 des Druckstücks 2 gebildeten Hohlraums angeordnet und zwischen dem Bodenteil 6 des Druckstücks 2 und der Stirnwandung 15 der Stellschraube 3 eingespannt ist.

Das Druckstück 2 und die Stellschraube 3 weisen jeweils aufeinander ausgerichtete Anlageflächen 17a, 17b auf, die in einer Grundstellung auf Abstand zueinander angeordnet sind. Dabei ist wenigstens eine der Anlageflächen 17a, 17b federnd ausgebildet, so dass die zweite Stufe des Andrucks einsetzt, sobald die Anlageflächen 17a, 17b miteinander kontaktieren. In dem dargestellten Ausführungsbeispiel wird die Anlagefläche 17a des Druckstückes 2 durch das freiliegende Ende des Zapfens 7, welches über die Mantelfläche 5 des Druckstückes 2 in Richtung auf die Stellschraube 3 übersteht gebildet. Der Zapfen 7 verläuft dabei koaxial zur Achse des Druckstücks 2 und befindet sich im Zentrum der Spiralfeder 4 bzw. wird von dieser umgeben. Der Zapfen 7 ist einstückig mit dem Druckstück 2 ausgebildet. Die Anlagefläche 17a ist somit vorzugsweise aus Aluminium ausgebildet.

Im Ausführungsbeispiel ist vorgesehen, dass die Anlagefläche 17b der Stellschraube 3 durch die Stirnwandung 15 gebildet wird. Im Ausführungsbeispiel ist desweiteren vorgesehen, dass die Anlagefläche 17b bzw. die Stirnwandung 15 federnd ausgebildet ist. Die Wandstärke der Stirnwandung 15 kann dabei beispielsweise 0,6 bis 0,9 mm, vorzugsweise 0,7 mm, betragen. Durch diese Ausgestaltung bzw. dadurch, dass hinter der Stirnwand 15 ein Freiraum vorhanden ist, kann die Stirnwand 15 bzw. die Anlagefläche 17b entsprechend einfedern.

Die Anschlagfläche 17b wird durch das Einschrauben der Stellschraube 3 eingestellt. Das Druckstückspiel bzw. der Abstand zwischen der Anlagefläche 17a und der Anlagefläche 17b ergibt sich durch die Federvorspannung der Spiralfeder 4, die sich auf der in den Aufnahmeraum 8 eingeschraubten Stellschraube 3 abstützt und auf der anderen Seite das Druckstück 2 gegen die Gleitfolie 10 bzw. den Gleitboden 11 und somit die Zahnstange 1 gegen das nicht dargestellte Ritzel drückt (welches ebenfalls im Lenkungsgehäuse 9 gelagert ist). Bevor die Anlagefläche 17a die Anlagefläche 17b kontaktiert bzw. während der Überwindung des Abstandes zwischen der Anlagefläche 17a und der Anlagefläche 17b wirkt nur die Federkraft der Spiralfeder 4. Sobald die Federkraft der Spiralfeder 4 überwunden ist und die Anlagefläche 17a die Anlagefläche 17b kontaktiert, wirkt die federnde Ausbildung der Stellschraube 3. Zur Begrenzung des Federwegs der Anlagefläche 17b bzw. zur Definition eines zweiten Druckstückspiels währenddessen die zweite Stufe des Andrucks wirkt, weist das Druckstück 2 und die Stellschraube 3 eine zweite jeweils aufeinander ausgerichtete Anlagefläche 18a, 18b auf, die in der Grundstellung einen Abstand zueinander aufweisen, der größer ist als der Abstand zwischen den ersten Anlageflächen 17a, 17b. Die zweite Anlagefläche 18a des Druckstücks 2 und die zweite Anlagefläche 18b der Stellschraube 3 dient somit als Endanschlag für die Bewegung des Druckstücks 2 in Richtung auf die Stellschraube 3. Das zweite Druckstückspiel ist somit fest durch die Bauteile, d.h. das Druckstück 2 und die Stellschraube 3, vorgegeben und wird durch die Anlagflächen 18a, 18b realisiert.

Die Anlageflächen 18b der Stellschraube 3 leitet die Kräfte ohne Federwirkung direkt in das Lenkungsgehäuse 9 ab. Beim Zurücklegen des zweiten Druckstückwegs, d.h. nach dem Kontaktieren der Anlagefläche 17a mit der Anlagefläche 17b, wird die beim Lenker auftretende Kraft in der federnden Stellschraube 3 gespeichert und somit beim Umlenken wieder zurückgegeben. Dadurch ist auch bei großen Lenkgeschwindigkeiten ein spielfreier Verzahnungseingriff gesichert. Die hohe Federrate der Stellschraube 3 speichert bei dem zweiten eng tolerierten Druckstückweg eine große Federkraft. Der daraus resultierende spielfreie Verzahnungseingriff reduziert die Geräuschentwicklung beim Umlenken.

Wie aus Fig. 1 ersichtlich ist, wird die zweite Anlagefläche 18a des Druckstücks 2 durch das freiliegende, in Richtung auf die Stellschraube 3 ausgerichtete Ende der Mantelfläche 5 des Druckstücks 2 ausgebildet. Die zweite Anlagefläche 18b der Stellschraube 3 wird durch das in Richtung auf das Druckstück 2 ausgerichtete Ende der ringförmigen Mantelfläche 14 der Stellschraube 3 gebildet.

Um eine progressive Federrate an der Stellschraube 3 bzw. der Anlagefläche 17b der Stellschraube 3 zu erzielen, hat es sich als vorteilhaft herausgestellt, die Anlagefläche 17a ballig auszuführen. D.h. die Anlagefläche 17a kann als gekrümmte Fläche, beispielsweise mit einem Radius von 100 bis 300 mm, vorzugsweise 200 mm, ausgebildet sein. Der Radius, den die Anlagefläche 17a aufweist, kann dabei an die Wandstärke der Stirnwandung 15 angepasst sein, so dass die in der Stirnwandung 15 bzw. der Stellschraube 3 auftretenden Spannungen beherrschbar sind. Ein weiterer Vorteil der balligen Ausgestaltung der Anlagefläche 17a besteht darin, dass sich das Druckstück 2 somit gut an der Zahnstange 1 ausrichten kann und nicht durch die Anlage an der Anlagefläche 17b überbestimmt ist.

Die Federrate der Spiralfeder 4 kann beispielsweise 200 bis 350 N/mm, vorzugsweise 280 N/mm, betragen. Die Federrate der Stellschraube 3 bzw. der Anlagefläche 17b kann beispielsweise 1.000 bis 25.000 N/mm betragen und über einen Federweg von 0,2 mm auf eine Federkraft von 2.500 N bis 3.500 N ansteigen.

Der Abstand zwischen der ersten Anlagefläche 17a des Druckstücks 2 und der ersten Anlagefläche 17b der Stellschraube 3 kann in der Grundstellung beispielsweise 0,02 mm bis 0,1 mm, vorzugsweise 0,05 mm, betragen. Der Abstand zwischen der zweiten Anlagefläche 18a des Druckstücks 2 und der zweiten Anlagefläche 18b der Stellschraube 3 kann in der Grundstellung beispielsweise 0,15 mm bis 0,3 mm, vorzugsweise 0,2 mm, betragen.

Die erfindungsgemäße Lösung ist bevorzugt für Zahnstangenlenkungen für Kraftfahrzeuge geeignet, selbstverständlich hierauf jedoch nicht beschränkt. Die erfindungsgemäße Vorrichtung kann auch bei Zahnstangenlenkungen in anderen Bereichen eingesetzt werden.

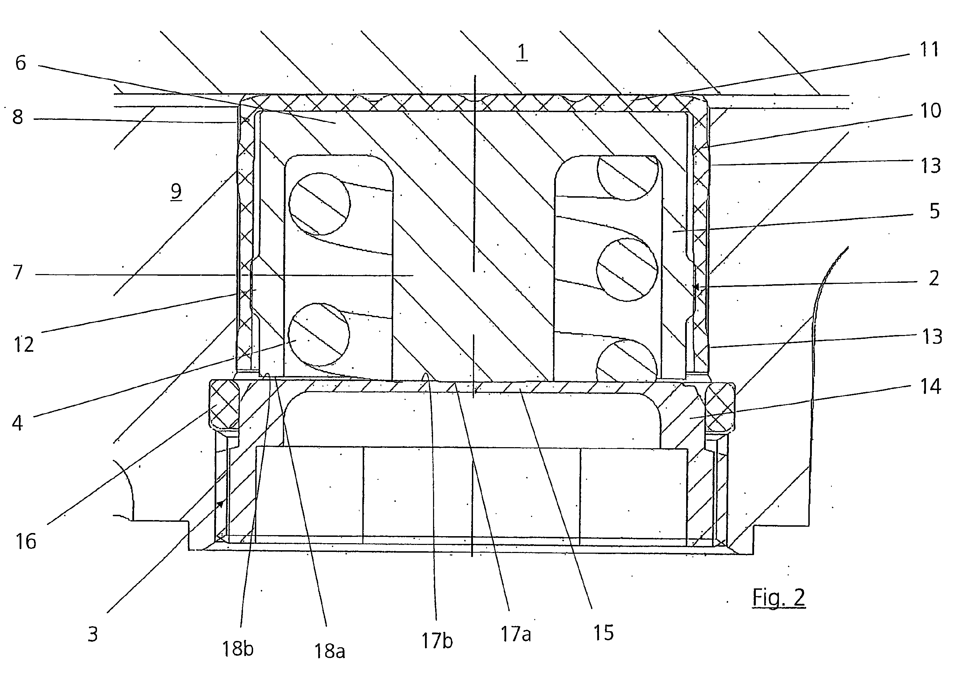

Die Figuren 2 bis 5 zeigen zu Fig. 1 alternative Ausführungsformen. Die in Fig. 1 und den Figuren 2 bis 5 mit den gleichen Bezugszeichen bezeichneten Teile entsprechen einander, insofern nachfolgend nicht auf Änderungen hingewiesen wird, sodass auf eine weitere Beschreibung dieser Teile bezüglich der Figuren 2 bis 5 verzichtet wird.

Fig. 2 zeigt eine Ausführungsform bei der die Anlageflächen 17a, 17b in einer Grundstellung aneinander anliegen. Dabei ist vorgesehen, dass die Anlagefläche 17b des Anschlagelements 3 durch die Anlagefläche 17a des Zapfens 7 in der Grundstellung eingefedert ist. Vorgesehen sein kann dabei, dass die Anlagefläche 17b in der Grundstellung 0,1 bis 0,5 mm eingefedert ist.

Gemäß Fig. 2 ist vorgesehen, dass die Anlagefläche 17a des Zapfens 7 zur Erzeugung einer progressiven Federkennlinie ballig ausgebildet ist.

Der Abstand zwischen den Anlageflächen 18a und 18b kann in der Grundstellung 0,05 mm bis 0,3 mm, vorzugsweise 0,1 mm, betragen.

Auf den Einsatz einer Feder 4 kann gegebenenfalls verzichtet werden.

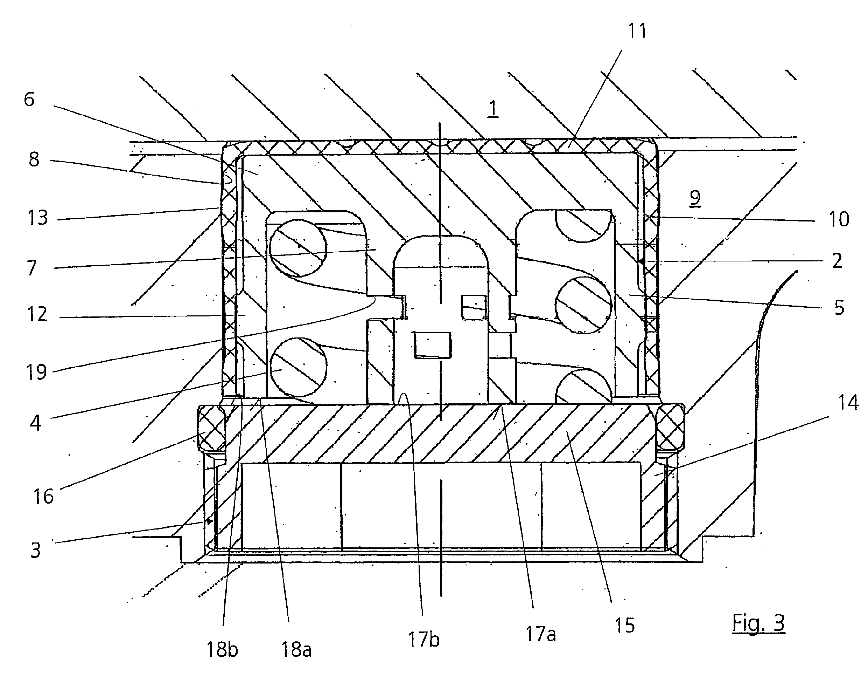

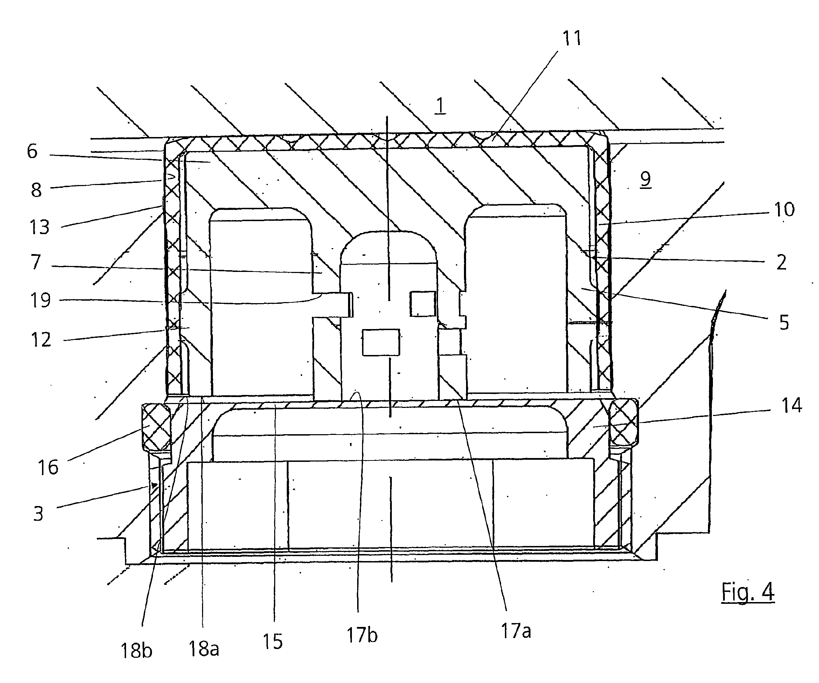

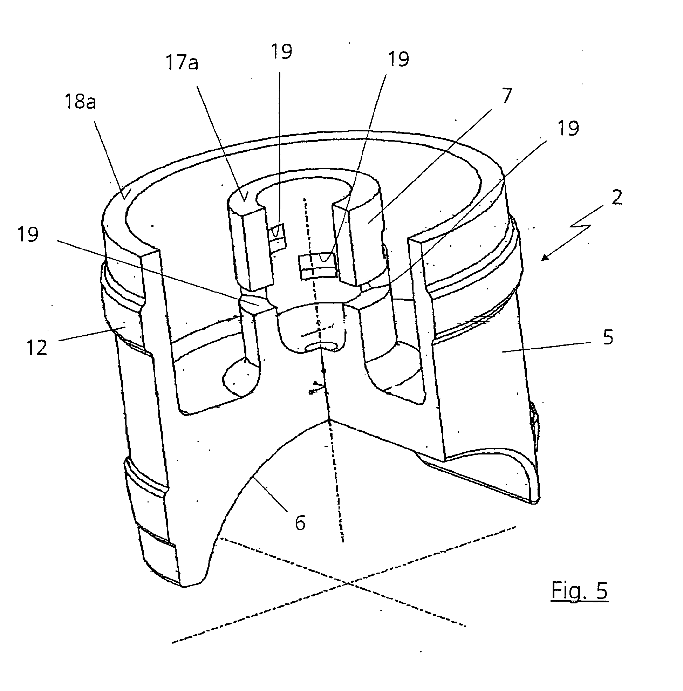

Fig. 3 zeigt eine Ausführungsform bei der die Anlageflächen 17a, 17b in einer Grundstellung aneinander anliegen. Dabei ist im Unterschied zu Fig. 2 vorgesehen, dass der Zapfen 7 federnd ausgebildet ist. Die Stirnwandung 15 ist gemäß Fig. 3 starr bzw. im wesentlichen starr ausgebildet. Der Zapfen 15 ist mit versetzt zueinander angeordneten Ausschnitten 19 bzw. mit Einkerbungen versehen, die zu der federnden Ausgestaltung des Zapfens 7 führen. Die Ausschnitte 19 sind dabei, wie sich auch aus den Figuren 4 und 5 ergibt sowohl in axialer Richtung des Zapfens 7 als auch entlang des Umfangs des Zapfens 7 versetzt zueinander angeordnet. Die Ausschnitte 19 erstrecken sich im Ausführungsbeispiel etwa um 1/8 - 1/4 des Umfangs des Zapfens. Dies hat sich in Versuchen als besonders geeignet herausgestellt, wobei die Ausschnitte 19 selbstverständlich auch auf andere Art und Weise in dem Zapfen 7 angeordnet sein und eine von dem Ausführungsbeispiel abweichende Länge aufweisen können.

Alternativ zu einer federnden Ausgestaltung des Zapfens 7 durch das Einbringen von Ausschnitten 19 kann beispielsweise auch vorgesehen sein, den Zapfen 7 derart dünn auszugestalten, dass sich daraus eine federnde Wirkung ergibt. Eine weitere Möglichkeit eine federnde Ausgestaltung des Zapfens 7 zu erreichen kann beispielsweise darin bestehen, diesen teilweise oder vollständig aus einem Material (E-Modul) auszuführen, welches eine gewünschte Elastizität aufweist. Hierfür können beispielsweise entsprechend bekannte Kunststoffe eingesetzt werden.

In Versuchen hat sich herausgestellt, dass sich eine federnde Ausgestaltung des Zapfens 7 in besonders einfacher Weise durch das Einbringen von Aussparungen 19 erreichen lässt.

Gemäß Fig. 3 ergibt sich die federnde Ausgestaltung der Vorrichtung im wesentlichen durch die federnde Ausgestaltung des Zapfens 7. In der in Fig. 4 alternativ dargestellten Ausführungsform weist auch die Stirnwandung 15 eine federnde Ausgestaltung auf, sodass sich die federnde Wirkung der erfindungsgemäßen Vorrichtung sowohl aus dem Zapfen 7 als auch aus der Stirnwandung 15 ergibt. Dabei kann gemäß Fig. 4 analog zu Fig. 2 vorgesehen sein, dass der Zapfen 7 bzw. die Stirnwandung 15 bereits in einer Grundstellung eingefedert sind. Durch die Vorspannung der Anlageflächen 17a, 17b des Zapfens 7 bzw. der Stirnwandung 15 wird dabei erreicht, dass die Anlagenflächen 17a, 17b auch dann noch aneinander anliegen, wenn beispielsweise das Ritzel aufgrund von Verschleiß abgenutzt ist.

Fig. 4 zeigt eine Ausgestaltung bei der auf den Einsatz eines Federelementes 4 verzichtet wurde. Selbstverständlich kann auch in der Ausführungsform gemäß Fig. 3 auf den Einsatz einer Feder 4 verzichtet werden, wenn dies für die vorgesehene Anwendung zweckmäßig erscheint.

Fig. 5 zeigt eine Darstellung des Druckstückes 2 mit einem 1/4-Ausschnitt.

Analog zu Fig. 2 kann gemäß den Figuren 3 bis 5 vorgesehen sein, dass der Abstand zwischen den Anlageflächen 18a und 18b in der Grundstellung 0,05 mm bis 0,3 mm, vorzugsweise 0,1 mm beträgt.

Die erfindungsgemäße Vorrichtung ist nicht auf die im Ausführungsbeispiel dargestellten Ausgestaltungen beschränkt. Insbesondere ergeben sich aus einer Zusammenschau der Figuren 1 bis 5 weitere mögliche Ausführungsformen bzw. Kombinationen.

### Bezugszeichen

- 1: Zahnstange
- 2: Druckstück
- 3: Anschlagelement, Stellschraube
- 4: Federelement
- 5: ringförmige Mantelfläche
- 6: Bodenteil
- 7: Zapfen
- 8: Aufnahmeraum
- 9: Lenkungsgehäuse
- 10: Gleitfolie
- 11: Gleitboden
- 12: Ring
- 13: Gleitfolienringe
- 14: ringförmige Mantelfläche
- 15: Stirnwandung
- 16: Dichtring
- 17a,b: erste Anlagefläche
- 18a,b: zweite Anlagefläche
- 19: Ausschnitte

## Patentansprüche

1. Vorrichtung zum Andrücken einer Zahnstange (1) an ein Ritzel mit einem Druckstück (2) und einem Anschlagelement (3), wobei ein zwischen dem Druckstück (2) und dem Anschlagelement (3) angeordnetes Federelement (4) die erste Stufe von wenigstens zwei aufeinanderfolgenden Stufen des Andrucks ausübt, welche das Druckstück (2) gegen die Zahnstange drücken, wobei das Druckstück (2) und das Anschagelement (3) jeweils aufeinander ausgerichtete Anlageflächen (17a, 17b) aufweisen, welche in einer Grundstellung auf Abstand zueinander angeordnet sind,
**dadurch gekennzeichnet, dass**
1.1 das Druckstück (2) und das Anschagelement (3) aus Metall gebildet sind,
1.2 die Anlagefläche (17b) des Anschlagelements (3) federnd ausgebildet ist, so dass die zweite Stufe des Andrucks einsetzt, sobald die Anlageflächen (17a,17b) miteinander kontaktieren, und
1.3 das Druckstück (2) und das Anschagelement (3) eine zweite jeweils aufeinander ausgerichtete Anlagefläche (18a,18b) aufweisen, die in der Grundstellung einen Abstand zueinander aufweisen, der größer ist als der Abstand der ersten Anlageflächen (17a,17b) zueinander, wobei die zweiten Anlageflächen (18a,18b) derart ausgebildet sind, dass diese einen Endanschlag für die Bewegung des Druckstücks (2) darstellen.

2. Vorrichtung nach Anspruch 1,
**dadurch gekennzeichnet, dass**
das Druckstück (2) eine Mantelfläche (5) und einen in Richtung auf das Anschlagelement (3) überstehenden Zapfen (7) aufweist, dessen freiliegendes Ende als Anlagefläche (17a) ausgebildet ist.

3. Vorrichtung nach Anspruch 2,
**dadurch gekennzeichnet, dass**
der Zapfen (7) koaxial zur Achse des Druckstücks (2) verläuft.

4. Vorrichtung nach Anspruch 1, 2 oder 3,
**dadurch gekennzeichnet, dass**
das Anschlagelement (3) eine ringförmige Mantelfläche (14) und eine als Anlagefläche (17b) ausgebildete Stirnwandung (15) aufweist.

5. Vorrichtung nach Anspruch 4,
**dadurch gekennzeichnet, dass**
das Federelement (4) im wesentlichen innerhalb eines Hohlraums des Druckstücks (2) angeordnet und zwischen einem Bodenteil (6) des Druckstücks (2) und der Stirnwandung (15) des Anschlagelements (3) eingespannt ist.

6. Vorrichtung nach Anspruch 5,
**dadurch gekennzeichnet, dass**
das Federelement als Spiralfeder (4) ausgebildet ist, in deren Zentrum sich der Zapfen (7), ausgehend von dem Bodenteil (6) des Druckstücks (2) in Richtung auf die Stirnwandung (15) erstreckt.

7. Vorrichtung nach einem der Ansprüche 2 bis 6,
**dadurch gekennzeichnet, dass**
der Zapfen (7) einstückig mit dem Druckstück (2) ausgebildet ist.

8. Vorrichtung nach einem der Ansprüche 1 bis 7,
**dadurch gekennzeichnet, dass**
der Abstand zwischen der ersten Anlagefläche (17a) des Druckstücks (2) zu der ersten Anlagefläche (17b) des Anschlagelements (3) in der Grundstellung 0,02 mm bis 0,1 mm, vorzugsweise 0,05 mm, beträgt.

9. Vorrichtung nach einem der Ansprüche 1 bis 8,
**dadurch gekennzeichnet, dass**
der Abstand der zweiten Anlagefläche (18a) des Druckstücks (2) zu der zweiten Anlagefläche (18b) des Anschlagelements (3) in der Grundstellung 0,15 mm bis 0,3 mm, vorzugsweise 0,2 mm, beträgt.

10. Vorrichtung nach einem der Ansprüche 2 bis 9,
**dadurch gekennzeichnet, dass**
das freiliegende, in Richtung auf das Anschlagelement (3) ausgerichtete Ende der Mantelfläche (5) des Druckstücks (2) als zweite Anlagefläche (18a) ausgebildet ist.

11. Vorrichtung nach einem der Ansprüche 1 bis 10,
**dadurch gekennzeichnet, dass**
das in Richtung auf das Druckstück (2) ausgerichtete Ende der ringförmigen Mantelfläche (14) des Anschlagelements (3) als zweite Anlagefläche (18b) ausgebildet ist.

12. Vorrichtung nach einem der Ansprüche 1 bis 11,
**dadurch gekennzeichnet, dass**
das Druckstück (2) in einem Aufnahmeraum (8) eines Lenkungsgehäuses (9) angeordnet ist, wobei zwischen der Innenwandung des Aufnahmeraums (8) und der Mantelfläche (5) des Druckstücks (2) eine Gleitfolie (10) angeordnet ist.

13. Vorrichtung nach Anspruch 12,
**dadurch gekennzeichnet, dass**
die Gleitfolie (10) einen Gleitboden (11) als Lagerstelle für die Zahnstange (1) aufweist.

14. Vorrichtung nach Anspruch 12 oder 13,
**dadurch gekennzeichnet, dass**
die Gleitfolie (10) mittels Presspassung in dem Aufnahmeraum (8) angeordnet ist.

15. Vorrichtung nach Anspruch 12, 13 oder 14,
**dadurch gekennzeichnet, dass**
das Anschlagelement als Stellschraube (3) ausgebildet ist, welche in den Aufnahmeraum (8) einschraubbar ist.

16. Vorrichtung zum Andrücken einer Zahnstange an ein Ritzel mit einem Druckstück und einem Anschlagelement, wobei das Druckstück und das Anschlagelement jeweils aufeinander ausgerichtete Anlageflächen aufweisen,
**dadurch gekennzeichnet, dass**
16.1 das Druckstück (2) und das Anschlagelement (3) aus Metall gebildet sind;
16.2 das Druckstück (2) und das Anschlagelement (3) jeweils aufeinander ausgerichtete Anlageflächen (17a,17b) aufweisen, die in einer Grundstellung aneinander liegen;
16.3 die Anlagefläche (17b) des Anschlagelements (3) federnd ausgebildet ist;
16.4 das Druckstück (2) und das Anschlagelement (3) eine zweite jeweils aufeinander ausgerichtete Anlagefläche (18a,18b) aufweisen, die in der Grundstellung einen Abstand zueinander aufweisen und derart ausgebildet sind, dass diese einen Endanschlag für die Bewegung des Druckstücks (2) darstellen.

17. Vorrichtung nach Anspruch 16,
**dadurch gekennzeichnet, dass**
das Druckstück (2) eine Mantelfläche (5) und einen in Richtung auf das Anschlagselement (3) überstehenden Zapfen (7) aufweist, dessen freiliegendes Ende als Anlagefläche (17a) ausgebildet ist.

18. Vorrichtung nach Anspruch 16 oder 17,
**dadurch gekennzeichnet, dass**
der Zapfen (7) koaxial zur Achse des Druckstücks (2) verläuft.

19. Vorrichtung nach Anspruch 16, 17 oder 18,
**dadurch gekennzeichnet, dass**
das Anschlagelement (3) eine ringförmige Mantelfläche (14) und eine als Anlagefläche (17b) ausgebildete Stirnwandung (15) aufweist.

20. Vorrichtung nach Anspruch 19,
**dadurch gekennzeichnet, dass**
die Anlagefläche (17b) des Anschlagelements (3) in der Grundstellung durch die Anlagefläche (17a) des Zapfens (7) eingefedert bzw. gespannt ist.

21. Vorrichtung nach einem der Ansprüche 17 bis 20,
**dadurch gekennzeichnet, dass**
die Anlagefläche (17a) des Zapfens (7) zur Erzeugung einer progressiven Federkennlinie ballig ausgebildet ist.

22. Vorrichtung nach einem der Ansprüche 17 bis 21,
**dadurch gekennzeichnet, dass**
der Zapfen (7) einstückig mit dem Druckstück (2) ausgebildet ist.

23. Vorrichtung nach Anspruch 17 und einem der Ansprüche 17 bis 22,
**dadurch gekennzeichnet, dass**
das freiliegende, in Richtung auf das Anschlagelement (3) ausgerichtete Ende der Mantelfläche (5) des Druckstücks (2) als zweite Anlagefläche (18a) ausgebildet ist.

24. Vorrichtung nach einem der Ansprüche 17 bis 23,
**dadurch gekennzeichnet, dass**
das in Richtung auf das Druckstück (2) ausgerichtete Ende der ringförmigen Mantelfläche (14) des Anschlagelements (3) als zweite Anlagefläche (18b) ausgebildet ist.

25. Vorrichtung nach einem der Ansprüche 16 bis 24,
**dadurch gekennzeichnet, dass**
das Anschlagelement als Stellschraube (3) ausgebildet ist.

## Claims

1. Device for pressing a rack (1) onto a pinion, having a pressure piece (2) and a stop element (3), a spring element (4) which is arranged between the pressure piece (2) and the stop element (3) exerting the first stage of at least two stages of the pressure which follow one another and press the pressure piece (2) against the rack, the pressure piece (2) and the stop element (3) in each case having contact faces (17a, 17b) which are oriented toward one another and are arranged at a distance from one another in a basic position,
**characterized in that**
1.1 the pressure piece (2) and the stop element (3) are formed from metal,
1.2 the contact face (17b) of the stop element (3) is of resilient configuration, with the result that the second stage of the pressure begins as soon as the contact faces (17a, 17b) make contact with one another, and
1.3 the pressure piece (2) and the stop element (3) each have a second contact face (18a, 18b) which are oriented toward one another and, in the basic position, are at a distance from one another which is greater than the distance of the first contact faces (17a, 17b) from one another, the second contact faces (18a, 18b) being configured in such a way that they represent an end stop for the movement of the pressure piece (2).

2. Device according to Claim 1, **characterized in that** the pressure piece (2) has a circumferential surface (5) and a pin (7) which protrudes in the direction of the stop element (3) and the exposed end of which is configured as a contact face (17a).

3. Device according to Claim 2, **characterized in that** the pin (7) extends coaxially with respect to the axis of the pressure piece (2).

4. Device according to Claim 1, 2 or 3, **characterized in that** the stop element (3) has an annular circumferential surface (14) and an end wall (15) which is configured as a contact face (17b).

5. Device according to Claim 4, **characterized in that** the spring element (4) is arranged substantially within a hollow space of the pressure piece (2) and is clamped between a base part (6) of the pressure piece (2) and the end wall (15) of the stop element (3).

6. Device according to Claim 5, **characterized in that** the spring element is configured as a helical spring (4), in the center of which the pin (7), starting from the base part (6) of the pressure piece (2), extends in the direction of the end wall (15).

7. Device according to one of Claims 2 to 6, **characterized in that** the pin (7) is configured in one piece with the pressure piece (2).

8. Device according to one of Claims 1 to 7, **characterized in that** the distance between the first contact face (17a) of the pressure piece (2) and the first contact face (17b) of the stop element (3) is from 0.02 mm to 0.1 mm, preferably 0.05 mm, in the basic position.

9. Device according to one of Claims 1 to 8, **characterized in that** the distance of the second contact face (18a) of the pressure piece (2) from the second contact face (18b) of the stop element (3) is from 0.15 mm to 0.3 mm, preferably 0.2 mm, in the basic position.

10. Device according to one of Claims 2 to 9, **characterized in that** the exposed end, which is oriented in the direction of the stop element (3), of the circumferential surface (5) of the pressure piece (2) is configured as a second contact face (18a).

11. Device according to one of Claims 1 to 10, **characterized in that** the end, which is oriented in the direction of the pressure piece (2), of the annular circumferential surface (14) of the stop element (3) is configured as a second contact face (18b).

12. Device according to one of Claims 1 to 11, **characterized in that** the pressure piece (2) is arranged in a receptacle space (8) of a steering housing (9), a sliding foil (10) being arranged between the inner wall of the receptacle space (8) and the circumferential surface (5) of the pressure piece (2).

13. Device according to Claim 12, **characterized in that** the sliding foil (10) has a sliding base (11) as a bearing point for the rack (1).

14. Device according to Claim 12 or 13, **characterized in that** the sliding foil (10) is arranged in the receptacle space (8) by means of an interference fit.

15. Device according to Claim 12, 13 or 14, **characterized in that** the stop element is configured as a setting screw (3) which can be screwed into the receptacle space (8).

16. Device for pressing a rack onto a pinion, having a pressure piece and a stop element, the pressure piece and the stop element in each case having contact faces which are oriented toward one another,
**characterized in that**
16.1 the pressure piece (2) and the stop element (3) are formed from metal;
16.2 the pressure piece (2) and the stop element (3) in each case have contact faces (17a, 17b) which are oriented toward one another and bear against one another in a basic position;
16.3 the contact face (17b) of the stop element (3) is of resilient configuration;
16.4 the pressure piece (2) and the stop element (3) each have a second contact face (18a, 18b) which are oriented toward one another and, in the basic position, are at a distance from one another and are configured in such a way that they represent an end stop for the movement of the pressure piece (2).

17. Device according to Claim 16, **characterized in that** the pressure piece (2) has a circumferential surface (5) and a pin (7) which protrudes in the direction of the stop element (3) and the exposed end of which is configured as a contact face (17a).

18. Device according to Claim 16 or 17, **characterized in that** the pin (7) extends coaxially with respect to the axis of the pressure piece (2).

19. Device according to Claim 16, 17 or 18, **characterized in that** the stop element (3) has an annular circumferential surface (14) and an end wall (15) which is configured as a contact face (17b).

20. Device according to Claim 19, **characterized in that** the contact face (17b) of the stop element (3) is deflected or clamped in the basic position by the contact face (17a) of the pin (7).

21. Device according to one of Claims 17 to 20, **characterized in that** the contact face (17a) of the pin (7) is of cambered configuration in order to generate a progressive spring characteristic diagram.

22. Device according to one of Claims 17 to 21, **characterized in that** the pin (7) is configured in one piece with the pressure piece (2).

23. Device according to Claim 17 and one of Claims 17 to 22, **characterized in that** the exposed end, which is oriented in the direction of the stop element (3), of the circumferential surface (5) of the pressure piece (2) is configured as a second contact face (18a).

24. Device according to one of Claims 17 to 23, **characterized in that** the end, which is oriented in the direction of the pressure piece (2), of the annular circumferential surface (14) of the stop element (3) is configured as a second contact face (18b).

25. Device according to one of Claims 16 to 24, **characterized in that** the stop element is configured as a setting screw (3).

## Revendications

1. Dispositif pour serrer une crémaillère (1) contre un pignon avec une pièce de pression (2) et un élément de butée (3), un élément de ressort (4) disposé entre la pièce de pression (2) et l'élément de butée (3) exerçant la première étape d'au moins deux étapes successives d'application de pression qui pressent la pièce de pression (2) contre la crémaillère, la pièce de pression (2) et l'élément de butée (3) présentant des surfaces d'appui (17a, 17b) respectivement orientées l'une vers l'autre qui sont disposées à distance l'une de l'autre dans une position de base,
**caractérisé en ce que**
1.1 la pièce de pression (2) et l'élément de butée (3) sont en métal,
1.2 la surface d'appui (17b) de l'élément de butée (3) est réalisée de manière élastique, de sorte que la deuxième étape de l'application de pression s'établisse dès que les surfaces d'appui (17a, 17b) viennent en contact l'une avec l'autre, et
1.3 la pièce de pression (2) et l'élément de butée (3) présentent chacun une deuxième surface d'appui (18a, 18b), lesquelles sont orientées l'une vers l'autre et présentent dans la position de base une distance l'une de l'autre qui est supérieure à la distance entre les première surfaces d'appui (17a, 17b), les deuxièmes surfaces d'appui (18a, 18b) étant réalisées de telle sorte qu'elles constituent une butée de fin de course pour le mouvement de la pièce de pression (2).

2. Dispositif selon la revendication 1,
**caractérisé en ce que** la pièce de pression (2) présente une surface d'enveloppe (5) et un tourillon (7) saillant dans la direction de l'élément de butée (3), dont l'extrémité libre est réalisée sous forme de surface d'appui (17a).

3. Dispositif selon la revendication 2,
**caractérisé en ce que** le tourillon (7) s'étend coaxialement à l'axe de la pièce de pression (2).

4. Dispositif selon la revendication 1, 2 ou 3,
**caractérisé en ce que** l'élément de butée (3) présente une surface d'enveloppe annulaire (14) et une paroi frontale (15) réalisée sous forme de surface d'appui (17b).

5. Dispositif selon la revendication 4,
**caractérisé en ce que** l'élément de ressort (4) est disposé essentiellement à l'intérieur d'une cavité de la pièce de pression (2) et est serré entre une partie de fond (6) de la pièce de pression (2) et de la paroi frontale (15) de l'élément de butée (3).

6. Dispositif selon la revendication 5,
**caractérisé en ce que** l'élément de ressort est réalisé sous la forme d'un ressort spiral (4) au centre duquel s'étend le tourillon (7), à partir de la partie de fond (6) de la pièce de pression (2) dans la direction de la paroi frontale (15).

7. Dispositif selon l'une quelconque des revendications 2 à 6,
**caractérisé en ce que** le tourillon (7) est réalisé d'une seule pièce avec la pièce de pression (2).

8. Dispositif selon l'une quelconque des revendications 1 à 7,
**caractérisé en ce que** la distance entre la première surface d'appui (17a) de la pièce de pression (2) et la première surface d'appui (17b) de l'élément de butée (3) dans la position de base vaut 0,02 mm à 0,1 mm, de préférence 0,05 mm.

9. Dispositif selon l'une quelconque des revendications 1 à 8,
**caractérisé en ce que** la distance entre la deuxième surface d'appui (18a) de la pièce de pression (2) et la deuxième surface d'appui (18b) de l'élément de butée (3) dans la position de base vaut 0,15 mm à 0,3 mm, de préférence 0,2 mm.

10. Dispositif selon l'une quelconque des revendications 2 à 9, **caractérisé en ce que** l'extrémité libre de la surface d'enveloppe (5) de la pièce de pression (2) orientée dans la direction de l'élément de butée (3) est réalisée sous forme de deuxième surface d'appui (18a).

11. Dispositif selon l'une quelconque des revendications 1 à 10,
**caractérisé en ce que** l'extrémité de la surface d'enveloppe annulaire (14) de l'élément de butée (3) orientée dans la direction de la pièce de pression (2) est réalisée sous forme de deuxième surface d'appui (18b).

12. Dispositif selon l'une quelconque des revendications 1 à 11,
**caractérisé en ce que** la pièce de pression (2) est disposée dans un espace de réception (8) d'une boîte de direction (9), une feuille de glissement (10) étant disposée entre la paroi intérieure de l'espace de réception (8) et la surface d'enveloppe (5) de la pièce de pression (2).

13. Dispositif selon la revendication 12,
**caractérisé en ce que** la feuille de glissement (10) présente un fond de glissement (11) en tant que point de support pour la crémaillère (1).

14. Dispositif selon la revendication 12 ou 13,
**caractérisé en ce que** la feuille de glissement (10) est disposée au moyen d'un ajustement serré dans l'espace de réception (8).

15. Dispositif selon la revendication 12, 13 ou 14,
**caractérisé en ce que** l'élément de butée est réalisé sous forme de vis de réglage (3) qui peut être vissée dans l'espace de réception (8).

16. Dispositif pour serrer une crémaillère contre un pignon avec une pièce de pression et un élément de butée, la pièce de pression et l'élément de butée présentant des surfaces d'appui respectivement orientées l'une vers l'autre,
**caractérisé en ce que**
16.1 la pièce de pression (2) et l'élément de butée (3) sont en métal,
16.2 la pièce de pression (2) et l'élément de butée (3) présentent à chaque fois des surfaces d'appui (17a, 17b) orientées l'une vers l'autre, qui sont situées l'une contre l'autre dans une position de base ;
16.3 la surface d'appui (17b) de l'élément de butée (3) est réalisée de manière élastique ;
16.4 la pièce de pression (2) et l'élément de butée (3) présentent chacun une deuxième surface d'appui (18a, 18b), lesquelles sont orientées l'une vers l'autre et présentent dans la position de base une distance l'une de l'autre, et sont réalisées de telle sorte qu'elles constituent une butée de fin de course pour le mouvement de la pièce de pression (2).
17. Dispositif selon la revendication 16,
**caractérisé en ce que** la pièce de pression (2) présente une surface d'enveloppe (5) et un tourillon (7) saillant dans la direction de l'élément de butée (3), dont l'extrémité libre est réalisée sous forme de surface d'appui (17a).
18. Dispositif selon la revendication 16 ou 17,
**caractérisé en ce que** le tourillon (7) s'étend coaxialement à l'axe de la pièce de pression (2).
19. Dispositif selon la revendication 16, 17 ou 18,
**caractérisé en ce que** l'élément de butée (3) présente une surface d'enveloppe annulaire (14) et une paroi frontale (15) réalisée sous forme de surface d'appui (17b).
20. Dispositif selon la revendication 19,
**caractérisé en ce que** la surface d'appui (17b) de l'élément de butée (3) est serrée ou comprimée par ressort dans la position de base par la surface d'appui (17a) du tourillon (7).
21. Dispositif selon l'une quelconque des revendications 17 à 20,
**caractérisé en ce que** la surface d'appui (17a) du tourillon (7) est réalisée sous forme sphérique pour produire une caractéristique de ressort progressive.
22. Dispositif selon l'une quelconque des revendications 17 à 21,
**caractérisé en ce que** le tourillon (7) est réalisé d'une seule pièce avec la pièce de pression (2).
23. Dispositif selon la revendication 17 et l'une quelconque des revendications 17 à 22,
**caractérisé en ce que** l'extrémité libre de la surface d'enveloppe (5) de la pièce de pression (2) orientée dans la direction de l'élément de butée (3) est réalisée sous forme de deuxième surface d'appui (18a).
24. Dispositif selon l'une quelconque des revendications 17 à 23,
**caractérisé en ce que** l'extrémité de la surface d'enveloppe annulaire (14) de l'élément de butée (3) orientée dans la direction de la pièce de pression (2) est réalisée sous forme de deuxième surface d'appui (18b).
25. Dispositif selon l'une quelconque des revendications 16 à 24,
**caractérisé en ce que** l'élément de butée est réalisé sous forme de vis de réglage (3).
